(19) Europäisches Patentamt
European Patent Office
Office européen des brevets

(11) Veröffentlichungsnummer: **0 404 941 A1**

(12)

# EUROPÄISCHE PATENTANMELDUNG veröffentlicht nach Art. 158 Abs. 3 EPÜ

(21) Anmeldenummer: **89903939.0**

(22) Anmeldetag: **26.12.88**

(86) Internationale Anmeldenummer:
**PCT/SU88/00276**

(87) Internationale Veröffentlichungsnummer:
**WO 89/08682 (21.09.89 89/23)**

(51) Int. Cl.[5]: **C08L 33/10**, C09K 11/06, C08F 2/44, C08F 120/14

(30) Priorität: **14.03.88 SU 4386343**

(43) Veröffentlichungstag der Anmeldung:
**02.01.91 Patentblatt 91/01**

(84) Benannte Vertragsstaaten:
**BE CH DE FR GB IT LI NL SE**

(71) Anmelder: **TOMSKY GOSUDARSTVENNY UNIVERSITET IMENI V.V. KUIBYSHEVA**
**pr. Lenina 36**
**Tomsk, 634010(US)**

(72) Erfinder: **MAIER, Robert Alexandrovich**
**ul. Kosareva, 8-63**
**Tomsk, 634012(SU)**
Erfinder: **SMAGIN, Vladimir Petrovich**
**ul. F.Lytkina, 10-87**
**Tomsk, 634075(SU)**
Erfinder: **MOKROUSOV, Gennady Mikhailovich**
**pr. Lenina, 63-318**
**Tomsk, 634050(SU)**
Erfinder: **CHUPAKHINA, Raisa Andreevna**
**ul. Nakhimova, 15-230**
**Tomsk, 634034(SU)**
Erfinder: **SKIVKO, Gennady Petrovich**
**ul. Kashurnikova, 18-101**
**Novosibirsk, 630112(SU)**
Erfinder: **KUSCH, Nikolai Pavlovich**
**ul. D.Davidova, 1-160**
**Novosibirsk, 630006(SU)**
Erfinder: **EVDOKIMOV, Alexandr Petrovich**
**ul. D.Kovalchuk, 7-40**
**Novosibirsk, 630122(SU)**
Erfinder: **BATALOV, Alexandr Petrovich**
**Irkutsky trakt, 13-161**
**Tomsk, 634049(SU)**
Erfinder: **KOSTESHA, Alexandr Valentinovich**
**ul. Petukhova, 142-37**
**Novosibirsk, 630119(SU)**

(74) Vertreter: **von Füner, Alexander, Dr. et al**
**Patentanwälte v. Füner, Ebbinghaus, Finck**
**Mariahilfplatz 2 & 3; 3**
**D-8000 München 90(DE)**

## (54) POLYMERISIERTE ZUSAMMENSETZUNG UM LUMINESZIERENDE UND SELEKTIV STRAHLUNGSABSORBIERENDE MATERIALIEN ZU ERHALTEN.

(57) Die Erfindung bezieht sich auf die Chemie von hochmolekularen Verbindungen.

Die polymerisierbare Mischung zur Herstellung von Lumineszenz- und eine Strahlung selektiv absorbierenden Stoffen auf der Basis von flüssigem Monomer enthält wenigstens 1 Seltenerdsalz einer halogensubstituierten niederen aliphatischen Karbonsäure in einer Menge, welche seine $5x10^{-5}$ bis 1 Mol/Liter betragende Konzentration im Monomer bewirkt.

Die Erfindung wird zum Beispiel in der Lichttechnik, Haushaltradioelektronik Verwendung finden.

EP 0 404 941 A1

EPAA-38417.8

# POLYMERISIERBARE MISCHUNG ZUR HERSTELLUNG VON LUMINESZENZ- UND EINE STRAHLUNG SELEKTIV ABSORBIERENDEN STOFFEN

## Gebiet der Technik

Die Erfindung bezieht sich auf die Chemie von hochmolekularen Verbindungen, und insbesondere betrifft die Erfindung eine polymerisierbare Mischung zur Herstellung von Luminiszenz- und eine Strahlung selektiv absorbierenden Stoffen.

Stoffe, welche die optische Strahlung durch ihre Filtration oder Luminiszenz umwandeln, lassen sich in der Opto- und Mikroelektronik als Elemente verwenden, welche die Strahlung sichtbar machen oder die kohärente Strahlung verstärken. Diese Stoffe können in der Lichttechnik als lumineszierende Schirme und Überzüge, in der Heliotechnik zur Herstellung von Fokussierelementen, in der Haushaltradioelektronik zur Steigerung des Farbkontrastes von Fernsehschirmen, in der Landwirtschaft und Biotechnologie zur Herstellung von Überzügen, die die Ultraviolettkomponente des Sonnenlichtes in die Strahlung im Rotbereich transformieren, sowie in anderen Einrichtungen zur Umwandlung der optischen Strahlung auch zur Verwendung kommen.

Die zur Umwandlung der optischen Strahlung verwendeten Stoffe müssen folgenden Hauptforderungen gerecht werden:

- hohe Transparenz im sichtbaren Spektralbereich,
- breiter Konzentrationsbereich von Aktivatorionen, darunter auch äusserst hohe Konzentrationen,
- hohe Lichtbeständigkeit, d.h. das Konstanthalten ihrer Funktion beim Betrieb im Verlauf einer längeren Zeit.

## Zugrundeliegender Stand der Technik

Zur Zeit ist es bekannt, dass als Stoffe, welche die optische Strahlung umwandeln, verschiedene optische Gläser verwendet werden können, die eine hohe Transparenz haben und hohe Lichtbeständigkeit aufweisen. Bei ihrer Aktivierung mit Neodym- oder Ytterbiumionen kann man eine ausreichend intensive Lumineszenz im nahen Infrarotbereich hervorrufen, aber die intensive Lumineszenz im sichtbaren Bereich ist an Glas sehr schwer zu bewirken. Das Glas besitzt auch eine hohe Dichte, was zu einer grösseren Masse von Glaserzeugnissen führt, wobei die hohe Sprödigkeit von optischen Gläsern die sehr vorsichtige Handhabung derselben erfordert. Die Technologien der Herstellung von Gläsern selbst und Glaserzeugnissen sind sehr arbeits- und energieaufwendig. Die Glasoptik im Abbesche Zahl-Brechungsindex-Diagramm nimmt einen Bereich ein, der den Bereich von polymeren Materialien nicht überdeckt.

Demgemäss werden heute Entwicklungen von polymeren Materialien zu Zwecken der Optik geführt, welche mit Seltenerdmetallen aktiviert werden.

Bekannt sind lumineszierende lanthanoidhaltige Polymere, welche die UV-Strahlung in die Strahlung im sichtbaren Bereich umwandeln. Sie stellen mit lumineszierenden Verbindungen aktivierte Polymere wie Polymethylakrylat oder Polystyrol oder Polymethakrylsäure, ihre Mischpolymerisate, Polyolefine, Polyvinylchlorid und Polykarbonat dar.

Bekannt ist ein Verfahren zur Herstellung von Luminophor durch Polymerisation einer 0,1 bis 10,0%igen Lösung von Europiumbenzoylazetonat (bzw. 0,025 bis 2,5 % Europium) in Methylmethakrylat bei der Lichtinitierung mit der UV-Strahlung. Der hergestellte Polymerluminophor kennzeichnet sich durch den engen Emissionsstrahl in einem Wellenlängenbereich von 580 bis 650 nm und ist zur Entwicklung eines Quantengenerators in einem Wellenlängenbereich von 590 bis 630 nm vorgeschlagen. Das angegebene Polymer weist eine geringe Metallkonzentration und unbedeutende fotolytische Beständigkeit von Chelatchromophoren (SU, A, 160181) auf.

Bekannt ist auch das reiche Sortiment von polymeren Materialien für die Bedeckung der Gewächshäuser auf der Basis von Polyäthylen, Polypropylen, Polyvinylchlorid, Polykarbonat, aktiviert mit Trialkyl- bzw. Triarylphosphinoxid-, Trialkylphosphat-, Dialkylsulfoxid-, Phenanthrolin- oder α,α -Bipyridyladdukten der β-Diketonate von Europium, Terbium, Samarium, Dysprosium oder Uranyl, sowie von Addukten des Europiumbenzoylbenzoats,-nitrats oder -chlorids, welche durch Vermischen von granuliertem Polymer mit einem lumineszierenden Zusatz in einem Mischer und anschliessende Verarbeitung in einem Extruder zu 0,10 bis 0,15 mm dicke Folie (PCT/SU 83/00041) hergestellt werden. Diese polymeren Materialien besitzen eine geringe Lichtdurchlässigkeit, die 75% bei einer Foliendicke von 0,10 bis 0,15 mm beträgt. Nur bei sehr niedrigen Konzentrationen des einzuführenden Zusatzes, welche das Polymer als schon praktisch keine Zusätze enthaltend charakterisieren, kommt die Lichtdurchlässigkeit an diese des Reinpolymers heran. Mit der Vergrösserung der Foliendicke wird sich die Lichtdurchlässigkeit bedeutend verringern.

Die gleiche Anmeldung beschreibt polymere Materialien, hergestellt durch Polymerisation von Methylmethakrylat, Styrol oder ihren Mischungen, welche 0,001 bis 2,0 Masse% oben angegebener Lumineszenzzusätze oder Terbiumanthranylat enthalten. Die herstellbaren Polymere sind ebenfalls gering lichtdurchlässig. Mit der Erhöhung der Zusatzkonzentration auf 2 Masse% verringert sich die Lichtdurchlässigkeit auf 77 bis 78%.

Bekannt sind ebenfalls Polymere (Journal of Applied Polymer Science, vol. 25, 1980, Y.Ueba, E.Banks and Y.Okamoto. "Investigation on the Synthesis and Characterisation of Rare Earth-Metall Containing Polymers", P. 2007 bis 2017), bei welchen das Europiumion mit der β-Diketonatgruppe als Fragment der Polymerisationskette verbunden ist. Das β-Diketonatfragment kann dabei zur Polymerisationshauptkette (Polyaryl-β-diketon) oder zum Seitenradikal der Polymerisationskette (Poly-β-benzoylazetylstyrol) gehören. Bei den angegebenen Polymeren erfolgt die Sättigung des Lumineszenzverhaltens, falls die Europiumkonzentration 1 Masse% erreicht. Mit höheren Aktivatorkonzentrationen nimmt die Leuchtintensität nicht zu. Bei höheren Konzentrationen ist es auch unmöglich, transparente Folien herzustellen, wodurch die Untersuchun-

gen an Pulvern durchgeführt wurden.

Bekannt ist ferner ein neodymhaltiges lichtdurchlässiges Polymer, welches als Lichtfilter für Farbbildröhren zum Einsatz kommt. Dieses Polymer wird durch thermische Polymerisation einer Lösung hergestellt, die aus Polymer und organischen Karbonsäuren (mit 6 bis 21 Kohlenstoffatomen) und/oder Neodymsalzen derselben besteht. Als Mischpolymerisat lässt sich Alkylmethakrylat (die Zahl von Alkylkohlenstoffatomen liegt zwischen 1 und 4) und/oder Styrol oder Kombination derselben und Akryl- oder Methakrylsäure und/oder Neodymsalz derselben verwenden, wobei der $Nd^{3\pm}$ Gehalt der Mischung 0,3 bis 20,0 Masse% (vorzugsweise 0,3 bis 15,0 Masse% (EP, B, 0100519) beträgt.

Das neodymhaltige lichtdurchlässige Polymer weist bei einer Dicke von 3 mm eine unter 85% in der Regel zwischen 80 und 82% liegende Gesamtlichtdurchlässigkeit auf, d.h. die Proben dieses Polymers streuen stark die Strahlung; mit der Erhöhung der Seltenerdionenkonzentration wird die optische Polymerbeschaffenheit heftig verschlechtert. Im Falle einer 11 Masse% Neodym enthaltenden Mischung beträgt z.B. die Gesamtlichtdurchlässigkeit 72% bei 2 mm dicker Polymerprobe und schon 61% bei 3 mm dicker Polymerprobe. Für diese Mischung ist ausserdem eine geringe Lumineszenzintensität wegen Aggregation und Löschung bei Obertönen von OH-Bindungen kennzeichnend. So weist für eine Probe, die gemäss EP, B, 0100519 zubereitet ist und das Ion $Eu^{3+}$ statt $Nd^{3+}$ bei einer Konzentration von 11 Masse% enthält, das herstellbare Polymer eine relative Lumineszenzintensität auf, die 7% beträgt.

Zweck der vorliegenden Erfindung ist der, eine polymerisierbare Mischung zur Herstellung von Lumineszenz- und eine Strahlung selektiv absorbierenden Stoffen zu entwickeln, die bei einer scharf ausgeprägten Lumineszenzfähigkeit lichtdurchlässig sind.

Es ist ein weiteres Ziel der vorliegenden Erfindung, eine polymerisierbare Mischung zur Herstellung von Lumineszenz- und eine Strahlung selektiv absorbierenden Stoffen zu entwickeln, die eine hohe Lichtbeständigkeit besitzen.

## Offenbarung der Erfindung

Der vorliegenden Erfindung liegt die Aufgabe zugrunde, durch Bildung eines homogenen Systems unter Molmasseverteilung seiner Komponenten eine polymerisierbare Mischung zur Herstellung von Lumineszenz- und eine Strahlung selektiv absorbierenden Stoffen zu entwickeln, die lichtdurchlässig sind und eine scharf ausgeprägte Lumineszenzfähigkeit und hohe Lichtbeständigkeit aufweisen.

Die angegebene Aufgabe wird dadurch gelöst, dass eine polymerisierbare Mischung zur Herstellung von Lumineszenz- und eine Strahlung selektiv absorbierenden Stoffen auf der Basis von flüssigem Monomer, die ein Seltenerdsalz einer Karbonsäure enthält, erfindungsgemäss als Seltenerdsalz einer Karbonsäure wenigstens 1 Seltenerdsalz einer halogensubstituierten niederen aliphatischen Karbonsäure in einer Menge enthält, die seine $5x10^{-5}$ bis 1 Mol/Liter betragende Konzentration im Monomer bewirkt.

Dank der beanspruchten Erfindung wird die Herstellung eines Polymers sichergestellt, welches die Gesamtlichtdurchlässigkeit von 92% (falls die Seltenerdmetallkonzentration der polymerisierbaren Mischung 15 Masse% beträgt) aufweist. Das durch Polymerisation der erfindungsgemässen europiumtrifluorazetathaltigen Mischung hergestellte Polymer hat eine relative Lumineszenzintensität, die 74% beträgt, was den Kennwert, erreicht bei der Verwendung des bekannten Stoffes, auf das Zehnfache übersteigt.

Die Lichtbeständigkeit des nach der beanspruchten Erfindung hergestellten Polymers liegt bedeutend höher als die des in der EP,B, 0100519)beschriebenen Polymers. So beobachtet man bei der UV-Bestrahlung des bekannten polymeren Materials mit Hilfe einer Hochdruckquecksilberdampflampe nach 2 Stunden den Abfall der Leuchtdichte des Polymers. Das polymere Material, hergestellt auf der Basis der erfindungsgemässen polymerisierbaren Mischung, zeigt den gleichen Abfall der Leuchtdichte nur nach 10 Stunden Bestrahlung.

Der beanspruchten Erfindung gemäss ist es zweckmässig, dass die polymerisierbare Mischung als Seltenerdsalze von halogenierten niederen aliphatischen Karbonsäuren Yttrium-, und/oder Lanthan- und/oder Lanthanoidensalze der fluor- und/oder chlor- und/oder brom- und/oder jodsubstituirten aliphatischen Karbonsäuren enthält, was es möglich macht, Monomerenlösungen mit hoher Konzentration an Seltenerdmetall herzustellen, welche nach einem der bekannten Verfahren unter Bildung des Polymers von hoher Transparenz (Lichtdurchlässigkeit 92%) polymerisiert werden.

Falls man Nicht-Perhalogenalkylkarboxylate zur Herstellung von Lumineszenzstoffen verwendet, ist es erfindungsgemäss zweckmässig, dass die polimerisierbare Mischung eine halogenierte niedere aliphatische Karbonsäure enthält, die wenigstens 1 Deuteriumatom hat, das das Wasserstoffatom ersetzt.

Zur Herstellung eines Materials, das die grösste Konzentration an Seltenerdmetallionen hat, ist es nach der beanspruchten Erfindung zweckmässig, dass die polymerisierbare Mischung Halogenazetat von Seltenerdmetallen als Salz einer halogenierten niederen aliphatischen Karbonsäure enthält.

Zwecks Sensibilisierung der Lumineszenz ist es nach der beanspruchten Erfindung zweckmässig, dass die polymerisierbare Mischung fotoaktive Zusätze und zwar organische Verbindungen mit Sauerstoff- und Wasserstoffheteroatomen zusätzlich enthält.

Nach der beanspruchten Erfindung ist es zweckmässig, dass die polymerisierbare Mischung als fotoaktive Zusätze heterozyklische Verbindungen und/oder $>$O-oder = O-gruppenhaltige Verbindungen enthält.

Nach der beanspruchten Erfindung ist es ausserdem zweckmässig, dass die polymerisierbare Mischung als fotoaktive Zusätze organische Verbindungen enthält, die wenigstens 1 Deuteriumatom enthalten, das das Wasserstoffatom ersetzt.

Nach der beanspruchten Erfindung ist es zweckmässig, dass die polymerisierbare Mischung fotoaktive Zusätze

in einer Menge enthält, die ihre Konzentration im Monomer, die zwischen $5x10^{-5}$ bis 2 Mol/Liter liegt, bewirkt.

Um die thermische Polymerisation der erfindungsgemässen Mischung zu ermöglichen, ist es nach der Erfindung zweckmässig, dass sie einen Radikalpolymerisationsanreger enthält.

Um die Aufbewahrung der erfindungsgemässen polymerisierbaren Mischung im Verlauf von einigen Wochen bei Raumtemperatur zu ermöglichen, ist es erfindungsgemäss zweckmässig, dass die Mischung den Polymerisationsanreger in einer Menge von höchstens 0,5%, bezogen auf die Masse der Mischung, enthält.

Nach der beanspruchten Erfindung ist es zweckmässig, dass die polymerisierbare Mischung als Monomer Alkylmethakrylat und/oder Allylmethakrylat und/oder Styrol und/oder ihre deuterierten Derivate enthält, dabei ist es zweckmässig, dass Alkylmethakrylate 1 bis 16 Kohlenstoffatome im Alkylrest haben.

## Beste Ausführungsform der Erfindung

Weitere Ziele und Vorteile der beanspruchten Erfindung sind aus der nachfolgenden ausführlichen Beschreibung der polymerisierbaren Mischung zur Herstellung von Lumineszenz- und eine Strahlung selektiv absorbierenden Stoffen und den Ausführungsbeispielen für diese Mischung ersichtlich.

Die erfindungsgemässe polymerisierbare Mischung enthält als Grundlage ein flüssiges Monomer. Als flüssiges Monomer kann die Mischung Alkylmethakrylate mit 1 bis 16 Kohlenstoffatomen im Radikal, d.h. Methylmethakrylat, Äthylmethakrylat, Propylmethakrylat und weiter bis Zetylmethakrylat, sowie Allylmethakrylat, Styrol, Tetraallylester der Benzophenontetrakarbonsäure, Methakryl- und Akrylsäure, höhere $\alpha$-Olefine (Hexen-1, Okten-1) enthalten.

Die Verwendung dieser Reihe von Monomeren macht es möglich, polymere Materialien mit einer breiten Palette der physikalisch-chemischen und physikalisch-mechanischen Eigenschaften herzustellen.

Die Verwendung des Tetraallylesters der Benzophenontetrakarbonsäure ist jedoch wegen geringer photolytischer Beständigkeit der hergestellten polymeren Materialien unzweckmässig. Die der polymerisierbaren Mischung zugesetzten Methakryl- und Akrylsäuren bewirken die Verringerung der Lumineszenzintensität des aus dieser Mischung gewonnenen Materials. α -Olefinkomponenten setzen die Löslichkeit von Halogenkarboxylaten in der monomeren Mischung herab. Danach ist es zweckmässiger, als flüssiges Monomer zur Herstellung der polymerisierbaren Mischung Alkylmethakrylate, Allylmethakrylate und Styrol zu verwenden.

Durch Verwendung von Allylmethakrylat und Styrol sowohl als Enzelmonomere als auch in Verbindung mit den aufgezählten Alkylmethakrylaten können Materialien, welche das dreidimensionale Netzwerk aufweisen, d.h. vernetzte Materialien, sowie Materialien hergestellt werden, die die verschiedenen Positionen im Brechungsindex - Abbesche Zahl -Diagramm einnehmen.

Die Verwendung von teilweise oder völlig deuterierten Monomeren, d.h. Monomeren, bei denen 1 oder mehrere Wasserstoffatome gegen Deuteriumatome ersetzt sind, führt zu einer gewissen Erhöhung der Lumineszenzeigenschaften und Verbesserung der Lichtdurchlässigkeit von Materialien im nahen IR-Spektralbereich.

Als Monomer ist Methylmethakrylat oder sind Mischungen auf seiner Basis in Verbindung mit anderen Monomeren vorteilhaft zu verwenden, weil dieses Monomer kommerziell zugänglich ist, nach verschiedenen Verfahren leicht polymerisiert wird, die bei der Polymerisation von Methylmethakrylat verlaufenden Prozesse gut untersucht sind und die hergestellten Polymere eine hohe Lichtdurchlässigkeit aufweisen.

Als zweite Komponente enthält die erfindungsgemässe polymerisierbare Mischung wenigstens 1 Seltenerdsalz einer halogensubstituierten niederen aliphatischen Karbonsäure.

Wir haben gefunden, dass es bei der Verwendung gerade von Halogenkarboxylaten der Seltenerdmetallen, d.h. von

Seltenerdsalzen der halogenierten niederen aliphatischen Karbonsäuren gelingt, Monomerenlösungen mit hoher Konzentration an Seltenerdmetall herzustellen, welche nach einem der bekannten Verfahren unter Bildung des Polymers von hoher Transparenz (Lichtdurchlässigkeit 92%) bei hohen Gehalten an Seltenerdmetallionen leicht zu polymerisieren sind.

Als Halogenkarboxylate von Seltenerdmetallen lassen sich diese von Yttrium und/oder Lanthan und/oder Zer, und/oder Praseodym und/oder Neodym und/oder Samarium und/oder Europium und/oder Gadolinium und/oder Terbium und/oder Dysprosium und/oder Holmium und/oder Erbium und/oder Thylium und/oder Ytterbium und/oder Lutetium einsetzen. Die Verwendung einiger Einzelsalze von den aufgezählten wie Halogenkarboxylate von Samarium, Europium, Terbium, Neodym, Erbium, Holmium, Thulium und Terbium macht es möglich, lichtdurchlässige im sichtbaren und nahen IR-Spektralbereich lumineszierende Polymere herzustellen. Durch Einmischen des zweiten Salzes wie Lanthan- und/oder Yttrium- und/oder Lutetium- und/oder Gadoliniumsalz wird die Lumineszenz wegen Abschwächung der konzentrationsbedingten Löschung sensibilisiert. Die Einführung von Terbiumsalz als zweites Salz in die europiumsalzhaltige Mischungen ruft die Sensibilisierung der Lumineszenz durch intermolekulare Anregungsenergieübertragung hervor.

Die Verwendung solcher Salze wir Zer-, Praseodym-, Neodym-, Holmium-, Erbiumsalze ermöglicht die Herstellung von Polymeren, welche fähig sind, die bestimmten Spektralbereiche im UV- und sichtbaren Spektralgebiet selektiv zu absorbieren. Durch gleichzeitige Einführung von zwei und mehr Salzen von den aufgezählten kann man Lichtfilter erzeugen, die einige Spektralbereiche absorbieren.

Das erhöhte Lösevermögen weisen Seltenerdsalze sowohl der niederen als auch höheren Halogenkarbonsäuren auf, aber nur Halogenkarboxylate der niederen Karbonsäuren gestatten, hohe Konzentrationen von Seltenerdmetallen zu erreichen. Mit höherer Zahl von Kohlenstoffatomen

im Alkylrest nimmt die maximale Grenze des homogenen Eindringens des Seltenerdmetallions ab. Der praktische Sinn hat die Verwendung von Halogenkarboxylaten, welche von Halogenazetaten und/oder Halogenpropionaten und/oder Halogenbutyraten und/oder Halogenvaleraten, d.h. aus einer Reihe der Salze von Halogenkarbonsäuren gewählt werden, bei den der Alkylrest 1 bis 4 Kohlenstoffatome hat. Vorteilhaft sind Halogenazetate von Seltenerdmetallen zu verwenden, welche die maximale Konzentration von Seltenerdmetallionen zu erzielen ermöglichen, und unter Halogenazetaten sind Trifluorazetate von Seltenerdmetallen am vorteilhaftesten. Falls Nicht-Trifluorazetate zur Verwendung kommen, sind völlig halogensubstituierte Karboxylate Perhalogenkarboxylate vorteilhaft einzusetzen.

Falls Nicht-Perhalogenalkylkarboxylate zur Herstellung von lumineszierenden Polymeren eingesetzt werden, sind solche Karboxylate vorteilhaft zu verwenden, bei denen die Wasserstoffatome im Alkylrest gegen Deuteriumatome ersetzt sind, was zum Herabsetzen der Lumineszenzlöschung und der Absorption bei Obertönen in den herstellbaren Materialien führt.

Die Ausnutzung der Halogenkarboxylate von Seltenerdmetallen in Mengen, die ihre Konzentration von $5x10^{-5}$ bis 1 Mol/Liter (oder $6x10^{16}$ bis $6x10^{20}$ $cm^{-3}$) im polymerisierbaren Monomer bewirken, begünstigt die Funktionsfähigkeit der technischen Lösung bei der Erfüllung der beliebigen der gestellten Aufgabe. Die Zugabe von Halogenkarboxylaten in einer Menge, welche die zum Erreichen ihrer Konzentration von 1 Mol/Liter erforderliche Menge übersteigt, ruft die Verringerung der Gesamtlichtdurchlässigkeit durch Verlaufen der Prozesse der Lichtstreuung hervor, welche mit dem Systemverlust an Homogenität verbunden ist. Die Zugabe von Halogenkarboxylaten in einer Menge, welche kleiner als die zum Erreichen ihrer Konzentration von $5 x 10^{-5}$ Mol/Liter in der Mischung erforderliche Menge ist, führt zum Verschwinden der positiven Wirkung, die mit der Äusserung der Lumineszenzeigenschaften verbnnden ist.

Um Lichtfiltermaterialien zu schaffen, sind karboxylatreiche polymerisierbare Mischungen zu verwenden. Die positive Wirkung wird dabei im Falle einer kleineren Lichtfilterdicke erreicht, was es möglich macht, die Verschlechterung des Auflösungsvermögens wegen Doppelbrechung zu vermeiden. Die Verwendung von niedrigkonzentrierten Mischungen bei grossen Dicken der Absorptionsschicht ist jedoch ebenso wirkungsvoll, besonders dann, wenn das hohe Auflösungsvermögen nicht erfordert wird, aber die Konstruktionseigenschaften konstantzuhalten sind.

Bei der Herstellung von polymeren Luminophoren ist die Konzentration der Karboxylate von Seltenerdmetallen für jeden konkreten Anwendungsfall auszuwählen. Falls faserige Folienmaterialien oder dünne Tafelmaterialien zu schaffen sind, wird dabei die Konzentration von Karboxylaten nah der angegebenen Obergrenze gegeben; falls massive Luminophore (Blöcke) gefordert werden, so wird die Konzentration von Karboxylaten weit von der angegebenen Obergrenze gegeben.

Von uns ist festgestellt, dass die Zugabe einiger organischer Verbindungen photoaktiver Zusätze zur polymerisierbaren Mischung die Sensibilisierung der Lumineszens, besonders bei mittels Europium-, Terbium- und Neodymkarboxylate aktivierten Polymeren bewirkt.

Als photoaktive Zusätze wurden von uns untersucht: stickstoffhaltige heterozyklische Verbindungen α,α-Bipyridyl; β,β-Bipyridyl; γ,γ-Bipyridyl; α,β-Bipyridyl; α,γ-Bipyridyl; Pyridin; α-Pikolin; 3,5-Lutidin; Chinolin; 8-Methylchinolin; 6,8-Dimethylchinolin; 4-Chlorchinolin; Pyrimidin; Phthalazin; Phenanthrolin; Karbonylverbindungen 9,10-Phenanthrenchinon; Dimethylformamid; Dimethylazetamid; S- und P-Alkyloxide Dimethylsulfoxid, Sulfolan, Triphenylphosphinoxid; Phosphorsäureester Trikresyl- und Tributylphosphate; N-Alkylamidphosphorsäureester Hexamethylphosphattriamid; schwefelhaltiger Heterozyklus Thiophen; schwefel- und stickstoffhaltige Verbindung Thioharnstoff; zyklische Äther Dioxan, Tetrahydrofuran; lineare einfache Äther Diäthyläther, Dibutyläther; Phenole Phenol, Brenzkatechin, Pyrogallol, Resorzin;

Alkohole Allylalkohol, Benzylalkohol; Metallchromindikatoren Eriochromschwarz T, Xylenolorange, Arsenazo III.

Es ist festgestellt, dass die Sensibilisierung der Lumineszenz bei der Verwendung von Karbonylverbindungen, Äthern, stickstoffhaltigen heterozyklischen Verbindungen, S- und P-Alkyloxiden und Säureestern, aufgezählten Metallchromindikatoren Eriochromschwarz T, Xylenolerange, Arsenazo-III auftritt. Bei Phenolen, Alkoholen, schwefelhaltigen heterozyklischen Verbindungen und schwefel- und stickstoffhaltigen Verbindungen wird die Sensibilisierung nicht nachgewiesen. Die durchgeführten Untersuchungen haben gestattet, den Kreis von organischen Verbindungen auf heterozyklische Verbindungen und >O oder = O gruppenhaltige Verbindungen zu beschränken und zum Beispiel Phenanthrolin für Europium und Terbium, Xylenolorange für Neodym zu benutzen.

Bei der Verwendung organischer Verbindungen als photoaktive Zusätze wird das beste Ergebnis dann erreicht, wenn die Wasserstoffatome in diesen Verbindungen gegen Deuteriumatome substituiert sind.

Die Konzentration des photoaktiven Zusatzes hängt vom molekularen Absorptionskoeffizienten desselben ab. Je höher der molekulare Absorptionskoeffizient ist, desto geriner ist im allgemeinen die erforderliche Konzentration. Der molekulare Absorptionskoeffizient hängt jedoch nicht nur von der Natur des photoaktiven Zusatzes selbst, sondern auch vom Charakter seiner Bindung an Karboxylat des Seltenerdmetalls ab. Im Zusammenhang damit ist die optimale Konzentration von Fall zu Fall individuell auszuwählen. Unsere Untersuchungen haben ergeben, dass die photoaktiven Zusätze in einem Konzentrationsbereich von $5x10^{-5}$ bis 2,0 Mol/Liter ihren voraussichtlichen Effekt zeigen.

Die hergestellte polymerisierbare Mischung lässt sich nach einem der bekannten Verfahren und zwar durch $\gamma$-, Licht- und thermische Initiierung polymerisieren. Wir haben gefunden, dass bei der $\gamma$-Polymerisation gefärbte Polymere hergestellt werden, dass bei der Lichtpolymerisation der Prozess sehr langsam (langsamer als

bei Reinmonomer) verläuft. Als besonders technologiegerecht erwies sich die thermische Polymerisation in Gegenwart eines Initiators. Als Polymerisationsanreger können Azodiisobuttersäuredinitril, Benzoylperoxid, Wasserstoffperoxid, Peroxymonoessigsäure und Pertrifluoressigsäure dienen. Azodiisobuttersäuredinitril bildet jedoch mit Seltenerdkarboxylaten unlösliche ausfallende Verbindungen. Solche Peroxyverbindungen wie Wasserstoffperoxid und Peressigsäuren lösen die Polymerisation schon an der Kälte aus, liefern jedoch der polymerisierbaren Mischung Hydroxygruppen, was sich auf den Lumineszenzeigenschaften der hergestellten Polymere ungünstig auswirkt. Von diesem Standpunkt aus ist Benzoylperoxid vorteilhaft zu verwenden, welches die Polymerisation beim Erhitzen der Mischungen auf eine zwischen 70 und 90°C liegende Temperatur bewirkt. Bei Raumtemperatur kann dabei die Mischung eine ausreichend lange Zeit (wochenlang) aufbewahrt werden.

Nach der beanspruchten Erfindung ist der genannte Polymerisationsanreger in der oben beschriebenen polymerisierbaren Mischung in einer Menge von höchstens 0,5%, bezogen auf die Masse dieser Mischung, enthalten.

Zum besseren Verstehen der vorliegenden Erfindung werden folgende Beispiele für ihre konkrete Ausführung angeführt.

Beispiel 1

In 8 ml vorgereinigtem Methylmethakrylat löst man 0,049 g ($1x10^{-4}$ Mol) Europium(III)-trifluorazetat $Eu(CF_3COO)_3$, 0,0016 g ($1x10^{-5}$ Mol) $\alpha,\alpha$-Bipyridyl auf. Durch Zugabe von Methylmethakrylat bringt man das Volumen der Lösung auf 10 ml auf und setzt 0,05 g Benzoylperoxid zu. Die hergestellte polymerisierbare Mischung hat folgende Konzentrationen von: Halogenkarboxylat $1x10^{-2}$ Mol/Liter, photoaktivem Zusatz $\alpha,\alpha$-Bipyridyl $1x10^{-3}$ Mol/Liter, Initiator Benzoylperoxid 0,5 Masse%.

Die polymerisierbare Mischung wird filtriert und in einem Thermostat bei einer Temperatur von 70°C innerhalb von 10 Stunden polymerisiert. Der hergestellte transparente polymere Block, dessen Dicke 2 mm beträgt,

weist eine mit einem Spektralphotometer gegenüber Luft gemessene Lichtdurchlässigkeit von 92% bei einer Schichtdicke von 2 mm auf. Was die Lichtbeständigkeit anbetrifft, so ist die Änderung der Lumineszenzeigenschaften bei der Lichtbestrahlung des Polymers mit Hilfe einer Hochdruckquecksilberdampflampe bei einer Leistung von 250 W innerhalb von 2 Stunden nicht nachgewiesen. Der zweifache Abfall der Leuchtdichte tritt nach 10 Stunden Bestrahlung auf. Die Lumineszenzintensität bei $\lambda_{max}$ = 613 nm, gemessen mit Hilfe einer Spektral- und Rechenanlage, die aus Gittermonochromator (1200 $mm^{-1}$), Anregungsblock mit Deuterium-Lampe und Interferenzfiltern ($\Delta\lambda$ ½ = 10 nm) und Registriereinheit mit Photovervielfachern und Mikrorechnern besteht, beträgt 5% des Maximalwertes.

Beispeil 2

Eine polymerisierbare Mischung, welche in 10 ml Methylmethakrylatlösung 0,640 g Europiumtrifluorazetat $Eu(CF_3COO)_3$, 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 18% des Maximalwertes.

Beispiel 3

Eine polymerisierbare Mischung, welche in 10 ml Methylmethakrylatlösung 1,225 g Europiumtrifluorazetat $Eu(CF_3COO)_3$, 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdickte tritt nach der Bestrahlung des polymeren Blocks innerhalb von 10 Stunden auf. Die Lumineszenzintensität bei $\lambda_{max}$ = 613 nm beträgt 26% des Maximalwertes.

Beispiel 4

Eine polymerisierbare Mischung, welche in 10 ml Methylmethakrylatlösung 1,960 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 46% des Maximalwertes.

Beispiel 5

Eine polymerisierbare Mischung, welche in 10 ml Methylmethakrylatlösung 2,450 g Europiumtrifluorazetat ($Eu(CF_3COO)_3$) und 0,05 g Benzoylperoxid enthält, wird unter Bedingungen hergestellt und polymerisiert, die den in Beispeil 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 54% des

Maximalwertes.

Beispiel 6

Eine polymerisierbare Mischung, welche in 10 ml Methylmethakrylatlösung 3,185 g Europiumtrifluorazetat ($EU(CF_3COO)_3$) und 0,05 g Benzoylperoxid enthält, wird unter Bedingungen, hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 64% des Maximalwertes.

Beispiel 7

Eine polymerisierbare Mischung, die in 10 ml Methylmethakrylatlösung 3,920 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 82% des Maximalwertes.

Beispiel 8

Eine polymerisierbare Mischung, welche in 10 ml Methylmethakrylatlösung 4,210 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transpraenten polymeren Blocks, d essen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 95% des Maximalwertes.

Beispiel 9

Eine polymerisierbare Mischung, welche in 10 ml Methylmethakrylatlösung 5,145 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 100% des Maximalwertes.

Beispiel 10

Eine polymerisierbare Mischung, welche in 10 ml Methylmethakrylatlösung 4,160 g Europiumtrichlorazetat ($Eu(CCl_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdickte tritt nach der Bestrahlung des polymeren

Blocks innerhalb von 10 Stunden auf. Die Lumineszenzintensität bei $\lambda_{max}$ = 613 nm beträgt 60% des Maximalwertes.

Beispiel 11

Eine polymerisierbare Mischung, welche in 10 ml Methylmethakrylatlösung 5,120 g Europiumtrichlorazetat ($Eu(CCl_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 77% des Maximalwertes.

Beispiel 12

Eine polymerisierbare Mischung, welche in 10 ml Methylmethakrylatlösung 5,760 g Europiumtrichlorazetat ($Eu(CCl_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 84% des Maximalwertes.

Beispiel 13

Eine polymerisierbare Mischung, welche in 10 ml Methylmethakrylatlösung 4,080 g Neodymtrifluorazetat

$(NdCF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen.

Das hergestellte Polymer weist eine schwache Lumineszenz bei $\lambda_{max}$ = 1,06 $\mu$m auf und absorbiert selektiv die Strahlung bei $\lambda m_{max}$ = 785, 740, 575, 525 nm.

Beispiel 14

Eine polymerisierbare Mischung, welche in 10 ml Methylmethakrylatlösung 3,750 g Terbiumtrifluorazetat ($Tb(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Das hergestellte Polymer weist eine intensive Lumineszenz bei $\lambda_{max}$ = 540 nm auf.

Beispiel 15

Eine polymerisierbare Mischung, welche in 10 ml Methylmethakrylatlösung 0,560 g Neodymmethakrylat ($Nd(CH_2=C(CH_3(COO)_3$), 0,500 g Methakrylsäure ($CH_2C(CH_3)COOH$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks

beträgt dabei 81%. Der zweifache Abfall der Leuchtdichte tritt nach der Bestrahlung des polymeren Blocks innerhalb von 5 Stunden auf. Die Lumineszenz des hergestellten Polymers bei $\lambda_{max}$ = 1,06 $\mu$m ist nicht nachgewiesen. Das Polymer absorbiert selektiv die Strahlung bei $\lambda_{max}$ = 785, 740, 575, 525 nm.

Beispiel 16

Eine polymerisierbare Mischung, welche in 10 ml Methylmethakrylatlösung 3,100 g Neodymmethakrylat ($Nd(CH_2 = C(CH_3)COO)_3$) 0,500 g Methakrylsäure ($CH_2=C(CH_3)COOH$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 61%. Der zweifache Abfall der Leuchtdichte tritt nach der Bestrahlung des polymeren Blocks innerhalb von 2 Stunden auf. Die Lumineszenz des hergestellten Polymers bei $\lambda_{max}$ = 1,06 $\mu$m ist nicht nachgewiesen. Das Polymer absorbiert selektiv die Strahlung bei $\lambda_{max}$ = 785, 740, 575, 525.

Beispiel 17

Eine polymerisierbare Mischung, welche in 10 ml Methylmethakrylatlösung 0,530 g Europiummethakrylat ($Eu(CH_2=C(CH_3)COO)_3$), 0,500 g Methakrylsäure($CH_2=C(CH_3)COOH$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 80%. Der zweifache Abfall der Leuchtdichte tritt nach der Bestrahlung des polymeren Blocks innerhalb von 5 Stunden auf. Die Lumineszenzintensität bei $\lambda_{max}$ = 613 nm beträgt 0,5% des Maximalwertes.

Beispiel 18

Beispiel 18

Eine polymerisierbare Mischung, welche in 10 ml Methylmethakrylatlösung 2,970 g Europiummethakrylat ($Eu(CH_2{=}C(CH_3)COO)_3$), 0,500 g Methakrylsäure ($CH_2{=}{=}C(CH_3)COOH$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 62%. Der zweifache Abfall der Leuchtdichte tritt nach derBestrahlung des polymeren Blocks innerhalb von 2 Stunden auf. Die Lumineszenzintensität bei $\lambda_{max}$= 613 beträgt 7% des Maximalwertes.

Beispiel 19

Eine polymerisierbare Mischung, welche in 10 ml Methylmethakrylatlösung 3,580 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähnlen. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 74% des Maximalwertes.

Beispiel 20

Eine polymerisierbare Mischung, welche in 10 ml Methylmethakrylatlösung 3,725 g Europiumtrifluorazetat ($Eu(CF_3COOH)_3$) 0,0012 g $\alpha,\alpha$-Bipyridyl ($C_{10}H_8N_2$) und 0,05 bg Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 100% des Maximalwertes.

Beispiel 21

Eine polymerisierbare Mischung, welche in 10 ml Methylmethakrylatlösung 1,275 g Europiumtrifluorazetat ($Eu(CF_3COO)_3$), 0,0012 g $\alpha,\alpha$-Bipyridyl ($C_{10}H_8N_2$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 31% des Maximalwertes.

Beispiel 22

Eine polymerisierbare Mischung, welche in 10 ml Methylmethakrylatlösung 1,275 g Europiumtrifluorazetat ($Eu(CF_3COO)_3$) und 0,05 g Benzoylperoxid enthält wird unter Bedingungen hergestellt und polymerisiert, die den in Beispiel 1 angegebenen ähneln.

Die Prüfung des hergestellten transpratenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung

des polymeren Blocks innerhalb von 10 Stunden nicht auf. Die Lumineszenzintensität bei $\lambda_{max}$= 613 nm beträgt 21% des Maximalwertes bei der Anregung mit ultravioletter Strahlung bei $\lambda_{max}$= 395 nm.

Beispiel 23

Eine polymerisierbare Mischung, welche in 10 Methylmethakrylatlösung 1,080 g Eurppiummethakrylat ($Eu(CH_2{=}C(CH_3)COO)_3$), 0,500 g Methakrylsäure ($CH_2{=}{=}C(CH_3)COOH$), 0,400 g $\alpha,\alpha$-Bipyridyl ($C_{10}H_8N_2$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 70%. Der zweifache Abfall der Leuchtdichte tirtt nach der Bestrahlung des polymeren Blocks innerhalb von 5 Stunden auf. Die Lumineszenzintensität bei $\lambda_{max}$= 713 nm beträgt 45% des Maximalwertes.

Beispiel 24

Eine polymerisierbare Mischung, welche in 10 ml Methylmethakrylatlösung 1,960 g Europiumtrifluorazetet($Eu(CF_3COO)_3$), 0,002 g $N,N$-Bipyridyl ($C_{10}H_8N_2$) und 0,05 g Benzoylperoxid enthält, wird unter Bedingungen hergestellt, und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 55% des Maximalwertes.

Beispiel 25

Eine polymerisierbare Mischung, welche in 10 ml

Methylmethakrylatlösung 1,960 Europiumtrifluorazetat ($Eu(CF_3COO)_3$), 0,0017 g Chinolin ($C_9H_7N$) und 0,05 g Benzoylperoxid enthält, wird unter Bedingungen hergestellt und polymerisiert, die den in Beispiel 1 angegebenen ähneln.

Die Prüfung des hergestellten transparenden polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 mm beträgt 50% des des Maximalwertes.

Beispiel 26

Eine polymerisierbare Mischung, welche in 10 ml Methylmethakrylatlösung 1,960 g Europiumtrifluorazetat ($Eu(CF_3COO)_3$), 0,002 g 8-Methylchinolin ($C_{10}H_9N$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 51% des Maximalwertes.

Beispiel 27

Eine polymerisierbare Mischung, welche in 10 ml Methylmethakrylatlösung 1,960 g Europiumtrifluorazetat ($Eu(CF_3COO)_3$), 0,0022 g 4-Chlorchinolin ($C_9H_6NCl$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 50% des Maximalwertes.

Beispiel 28

Eine polymerisierbare Mischung, welche in 10 ml Methylmethakrylatlösung 1,960 g Europiumtrifluorazetat ($Eu(CF_3COO)_3$), 0,0021 g 6,8-Dimethylchinolin ($C_{11}H_{11}N$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 52% des Maximalwertes.

Beispiel 29

Eine polymerisierbare Mischung, welche in 10 ml Methylmethakrylatlösung 1,960 g Europiumtrifluorazetat ($Eu(CF_3COO)_3$), 0,0024 g Orthophenanthrolin ($C_{12}H_8N_2$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispeil 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 65% des Maximalwertes.

Beispiel 30

Eine polymerisierbare Mischung, welche in 10 ml Methylmethakrylatlösung 1,960 g Europiumtrifluorazetat ($Eu(CF_3COO)_3$), 0,001 g Pyrimidin ($C_4H_4N_2$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 50% des Maximalwertes.

Beispiel 31

Eine polymerisierbare Mischung, welche in 10 ml Methylmethakrylatlösung 1,960 g Europiumtrifluorazetat ($Eu(CF_3COO)_3$), 0,002 g Pyridin ($C_5H_5N_2$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 48% des Maximalwertes.

Beispiel 32

Eine polymerisierbare Mischung, welche in 10 ml Methylmethakrylatlösung 1,960 nm Europiumtrifluorazetat ($Eu(CF_3COO)_3$), 0,0024 g Phthalazin ($C_8H_6N_2$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 48% des Maximalwertes.

Beispiel 33

Eine polymerisierbare Mischung, welche in 10 ml Methylmethakrylatlösung 2,560 g Europiumtrichlorazetat ($Eu(CCl_3COO)_3$), 0,0024 g Orthophenanthrolin ($C_{12}H_8N_2$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 65% des Maximalwertes.

Beispiel 34

Eine polymerisierbare Mischung, welche in 10 ml Methylmethakrylatlösung 2,560 g Neodymtrichlorazetat ($Nd(CCl_3COO)_3$), 0,0013 g $\alpha,\alpha$-Bipyridyl ($C_{10}H_8N_2$) und 0,05 g Benzoylperoxid enthält, wird unter Bedingungen

hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 54% des Maximalwertes.

Beispiel 35

Eine polymerisierbare Mischung, welche in 10 ml Methylmethakrylatlösung 2,030 g Neodymtrifluorazetat ($Nd(CF_3COO)_3$), 0,05 g Xylenolorange und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%. Das hergestellte Polymer weist eine schwache Lumineszenz bei $\lambda_{max}$ = 1,06 $\mu$m auf und absorbiert selektiv die Strahlung bei $\lambda_{max}$= 785, 740, 575, 525 nm.

Beispiel 36

Eine polymerisierbare Mischung, welche in 10 ml Methylmethakrylatlösing 5,020 g Neodymtrifluorazetat ($Nd(CF_3COO)_3$), 0,067 g Xylenolorange und 0,05 g Benzoylperoxid enthält, word unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 90%. Das hergestellte Polymer weist eine schwache Lumineszenz bei $\lambda_{max}$= 1,06 $\mu$m auf und absorbiert selektiv die Strahlung bei $\lambda_{max}$ = 785, 740, 575, 525 nm.

Beispiel 37

Eine polymerisierbare Mischung, welche in 10 ml Methylmethakrylatlösung 1,250 g Terbiumtrifluorazetat ($Tb(CF_3COO)_3$), 0,0014 g Orthophenanthrolin ($C_{12}H_8N_2$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%. Die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Das hergestellte Polymer weist eine intensive Dumineszenz bei $\lambda_{max}$= 540 nm auf.

Beispiel 38

Eine polymerisierbare Mischung, welche in 10 ml Methylmethakrylatlösung 1,615 g Terbiumtrichlorazetat ($Tb(CCl_3COO)_3$), 0,0023 g $\alpha$-Pikolin ($C_6H_7N$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Das hergestellte Polymer weist eine intensive Lumineszenz bei $\lambda_{max}$= 540 nm auf.

Beispiel 39

Eine polymerisierbare Mischung, welche in 10 ml Methylmethakrylatlösung 1,520 g Ytterbiumtrichtlorazetat ($Yb(CCl_3COO)_3$), 0,0011 g $\alpha,\alpha$-Bipyridyl ($C_{10}H_8N_2$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf.Das hergestellte Polymer weist eine schwache Lumineszenz bei $\lambda_{max}$= 0,97 nm auf und absorbiert selektiv die Strahlung bei $\lambda_{max}$= 0,97 nm.

Beispiel 40

Eine polymerisierbare Mischung, welche in 10 ml Methylmethakrylatlösung 1,340 g Praseodymtrifluorazetat ($Pr(CF_3COO)_3$), 0,0013 g Orthophenanthrolin und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Das hergestellte Polymer weist eine schwache Lumineszenz bei $\lambda_{max}$ = 450 nm und $\lambda_{max}$=630 nm, absorbiert selektiv die Strahlung bei $\lambda_{max}$=445 , 470, 630 nm.

Beispiel 41

Eine polymerisierbare Mischung, welche in 10 ml Methylmethakrylatlösung 1,320 g Samariumtrifluorazetat ($Sm(CF_3COO)_3$), 0,004 g 8-Methylchinolin ($C_{10}H_9N$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Das hergestellte Polymer weist eine schwache Lumineszenz bei $\lambda_{max}$= 550 und $\lambda_{max}$= 680 nm auf.

Beispiel 42

Eine polymerisierbare Mischung, welche in 10 ml Methylmethakrylatlösung 1,250 g Terbiumtrfluorazetat ($Tb(CF_3COO)_3$), 0,004 g 4-Chlorchinolin ($C_9H_6NCl$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Das hergestellte Polymer weist eine Lumineszenz bei $\lambda_{max}$= 540 nm auf.

Beispiel43

Eine polymerisierbare Mischung, welche in 10 ml Methylmethakrylatlösung 0,006 g Dysprosiumtrifluorazetat ($Dy(CF_3COO)_3$), 0,0002 g Pyridin ($C_5H_5N$) und 0,5 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, Das hergestellte Polymer weist eine

schwache Lumineszenz bei $\lambda_{max}$ = 550 nm und $\lambda_{max}$= 650 nm auf.

Beispiel 44

Eine polymerisierbare Mischung, welche in 10 ml Methylmethakrylatlösung 0,065 g Terbiumtrifluorazetat ($Tb(CF_3COO)_3$), 0,0203 g $\alpha,\alpha$-Bipyridyl ($C_{10}H_9N_2$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Das hergestellte Polymer weist eine scharf ausgeprägte Lumineszenz bei $\lambda_{max}$= 540 nm auf.

Beispiel 45

Eine polymerisierbare Mischung, welche in 10 ml Methylmethakrylatlösung 2,310 g Ytterbiumtrichlorazetat ($Yb(CCl_3COO)_3$), 0,009 g Chinolin ($C_9H_7N$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, Das hergestellte Polymer weist eine schwache Lumineszenz bei $\lambda_{max}$= 0,970 nm auf.

Beispiel 46

Eine polymerisierbare Mischung, welche in 10 ml Methylmethakrylatlösung 0,0003 g Dysprosiumtrifluorazetat ($Dy(CF_3COO)_3$), 0,00015 g 8-Methylchinolin ($C_{10}H_9N$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%. Das hergestellte Polymer weist eine sehr schwache Lumineszenz bei $\lambda_{max}$= 550 nm auf.

Beispiel 47

Eine polymerisierbare Mischung, welche in 10 ml Methylmethakrylatlösung 3,185 g Europiumtrifluorazetat ($Eu(CF_3COO)_3$), 0,0034 g $\alpha$,$\alpha$-Bipyridyl ($C_{10}H_8N_2$) und 0,05 g Benzoylperoxid enthält, wird unter Bedingungen hergestellt, die den in Beispiel 1 angegebenen ähneln und unter Einwirkung der Strahlung einer Hochdruckquecksilberdampflampe polymerisiert.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%. Das hergestellte Polymer weist eine scharf ausgeprägte Lumineszenz bei $\lambda_{max}$= 613 nm auf.

Beispiel 48

Eine polymerisierbare Mischung, welche in 10 ml Methylmethakrylatlösung 5,020 g Neodymtrifluorazetat ($Nd(CF_3COO)_3$), 0,0054 g $\alpha$,$\alpha$-Bipyridyl ($C_{10}H_8N_2$) und 0,05 g Benzoylperoxid enthält, wird unter Bedingungen hergestellt, die den in Beispiel 1 angegebenen ähneln, und unter Einwirkung der Strahlung einer Hochdruckquecksilberdampflampe polymerisiert.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, Das hergestellte Polymer weist eine schwache Lumineszenz bei $\lambda_{max}$= 1,06 $\mu$m auf und absorbiert selektiv die Strahlung bei $\lambda_{max}$ = 785, 740, 575, 525 nm.

Beispiel 49

Eine polymerisierbare Mischung, welche in 10 ml Methylmethakrylatlösung 3,185 g Europiumtrifluorazetat ($Eu(CF_3COO)_3$), 0,0034 g $\alpha$,$\alpha$-Bipyridyl ($C_{10}H_8N_2$) ent-

hält, wird unter Bedingungen hergestellt, die den in Beispiel 1 angegebenen ähneln, und unter Bestrahlung mit $^{60}Co$-$\gamma$-Strahlen polymerisiert.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%. Der zweifache Abfall der Leuchtdichte tritt nach der Bestrahlung des polymeren Blocks innerhalb von 6 Stunden auf. Die Lumineszenzintensität bei $\lambda_{max}$= 613 nm beträgt 76% des Maximalwertes.

Beispiel 50

Eine polymerisierbare Mischung, welche in 10 ml Methylmethakrylatlösung 5,020 g Neodymtrifluorazetat ($Nd(CF_3COO)_3$), 0,0054 g $\alpha,\alpha$-Bipyridyl ($C_{10}H_8N_2$) enthält, wird unter Bedingungen hergestellt, die den in Beispiel 1 angegebenen ähneln, und unter Bestrahlung mit $^{60}Co$-$\gamma$-Strahlen polymerisiert.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 90%. Das hergestellte Polymer weist eine schwache Lumineszenz bei $\lambda_{max}$= 1,06 $\mu$m auf und absorbiert selektiv die Strahlung bei $\lambda_{max}$= 785, 740, 575, 525 nm.

Beispiel 51

Eine polymerisierbare Mischung, welche in 10 ml Methylmethakrylatlösung 1,275 g Europiumtrifluorazetat ($Eu(CF_3COO)_3$), 0,004 g Erichromschwarz T und 0,05 g Benzoylperoxid enthält, wird unter Bedingungen, die den in Beispiel 1 angegebenen ähneln, hergestellt und polymerisiert.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$=613 nm beträgt 20% des Maximalwertes.

Beispiel 52

Eine polymerisierbare Mischung, welche in 10 ml Methylmethakrylatlösung 1,275 g Europiumtrifluorazetat ($Eu(CF_3COO)_3$), 0,0067 g Arsenazo-III und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$ = 613 nm beträgt 22% des Maximalwertes.

Beispiel 53

Eine polymerisierbare Mischung, welche in 10 ml Methylmethakrylatlösung 0,135 g Europiumtribromazetat und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%. Der zweifache Abfall der Leuchtdichte tritt nach der Bestrahlung des polymeren Blocks innerhalb von 4 Stunden auf. Die Lumineszenzintensität bei $\lambda_{max}$= 613 nm beträgt 6% des Maximalwertes.

Beispiel 54

Eine polymerisierbare Mischung, welche in 10 ml Methylmethakrylatlösung 0,096 g Europiumtrichlorazetat ($Eu(CJ_3COO)_3$) und 0,05 g Benzoylperoxid enthält, wird unter Bedingungen hergestellt und polymerisiert, die den

in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%. Der zweifache Abfall der Leuchtdichte tritt nach der Bestrahlung des polymeren Blocks innerhalb von 2 Stunden auf. Die Lumineszenzintensität bei $\lambda_{max}$= 613 nm beträgt 2% des Maximalwertes.

Beispiel 55

Eine polymerisierbare Mischung, welche in 10 ml Methylmethakrylatlösung 0,084 g Europiumpentafluorpropionat ($Eu(CF_3CF_2COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 4% des Maximalwertes.

Beispiel 56

Eine polymerisierbare Mischung, welche in 10 ml Methylmethakrylatlösung 0,160 g Europiumhexafluorbutyrat ($Eu(CF_3CF_2CF_2COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden

auf. Die Lumineszenzintensität bei $\lambda_{max}$= 613 nm beträgt 5% des Maximalwertes.

Beispiel 57

Eine polymerisierbare Mischung, welche in 10 ml Methylmethakrylatlösung 0,190 g Europiumperfluorvalerat ($Eu(CF_3CF_2CF_2CF_2COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$=614 nm beträgt 4% des Maximalwertes.

Beispiel 58

Eine polymerisierbare Mischung, welche in 10 ml Methylmethakrylatlösung 0,125 g Europiumperfluorisovalerat ($Eu(CF_3)_2CFCF_2COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 2% des Maximalwertes.

Beispiel 59

Eine polymerisierbare Mischung, welche in 10 ml Methylmethakrylatlösung 0,145 g 2,2,2,-Trifluor-1,1-dichlorpropionat von Europium ($Eu(CF_3CCl_2COO)_3$) und 0,05 g Benzoylperoxid enthält, wird unter Bedingungen hergestellt und

polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%. Der zweifache Abfall der Leuchtdichte tritt nach der Bestrahlung des polymeren Blocks innerhalb von 4 Stunden auf. Die Lumineszenzintensität bei $\lambda_{max}$= 613 nm beträgt 2% des Maximalwertes.

Beispiel 60

Eine polymerisierbare Mischung, welche in 10 ml Methylmethakrylatlösung 0,128 g Europiumtrifluorazetat ($Eu(CF_3COO)_3$), 0,019 g N,N-Dimethylformamid ($C_3H_7ON$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%. Der zweifache Abfall der Leuchtdichte tritt nach der Bestrahlung des polymeren Blocks innehalb von 4 Stunden auf. Die Lumineszenzintensität bei $\lambda_{max}$= 613 nm beträgt 10% der Maximalwertes.

Beispiel 61

Eine polymerisierbare Mischung, welche in 10 ml Methylmethakrylatlösung 0,128 g Europiumtrifluorazetat ($Eu(CF_3COO)_3$), 0,020 g Dimethylsulfoxid ($C_2H_6OS$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%. Der zweifache Abfall der Leuchtdichte tritt nach der Bestrahlung des polymeren Blocks innerhalb von 4 Stunden auf. Die Lumineszenzintensität bei

$\lambda_{max}$= 613 nm beträgt 10% des Maximalwertes.

Beispiel 62

Eine polymerisierbare Mischung, welche in 10 ml Methylmethakrylatlösung 0,128 g Europiumtrifluorazetat ($Eu(CF_3COO)_3$), 0,190 g Tetrahydrofuran ($C_4H_8O$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgeweisen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 8% des Maximalwertes.

Beispiel 63

Eine polymerisierbare Mischung, welche in 10 ml Methylmethakrylatlösung 0,128 g Europiumtrifluorazetat ($Eu(CF_3COO)_3$), 0,220 g Dioxan ($C_4H_8O_2$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden. Die Lumineszenzintensität bei $\lambda_{max}$= 613 nm beträgt 8% des Maximalwertes.

Beispiel 64

Eine polymerisierbare Mischung, welche in 10 ml Methylmethakrylatlösung 0,128 g Europiumtrifluorazetat ($(Eu)CF_3COO)_3$), 0,190 g Diäthyläther ($C_4H_{10}O$) und

0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften des innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 8% des Maximalwertes.

Beispiel 65

Eine polymerisierbare Mischung, welche in 10 ml Methylmethakrylatlösung 0,128 g Europiumtrifluorazetat ($Eu(CF_3COO)_3$), 0,330 g Dibutyläther ($C_8H_{18}O$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 8% des Maximalwertes.

Beispiel 66

Eine polymerisierbare Mischung, welche in 10 ml Methylmethakrylatlösung 0,128 g Europiumtrifluorazetat ($Eu(CF_3COO)_3$), 0,220 g N,N-Dimethylazetamid ($C_3H_9ON$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den

Methodiken durchgeführt, die den in Beispiel 1 angegebenen ähneln. Die Lichtdurchlässigkeit des Blocks beträgt dabei 92%. Der zweifache Abfall der Leuchtdichte tritt nach der Bestrahlung des polymeren Blocks innerhalb von 4 Stunden auf. Die Lumineszenzintensität bei $\lambda_{max}$=613 nm beträgt 10% des Maximalwertes.

Beispiel 67

Eine polymerisierbare Mischung, welche in 10 ml Äthylmethakrylatlösung 0,320 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Durchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$=613 nm beträgt 9% des Maximalwertes.

Beispiel 68

Eine polymerisierbare Mischung, welche in 10 ml Buthylmethakrylatlösung 0,160 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel angegebenen ähneln. Die Lichtdurchlässigkeit des Blocks beträgt dabei 90%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 3% des Maximalwertes.

Beispiel 69

Eine polymerisierbare Mischung, welche in 10 ml Hexylmethakrylatlösung 0,160 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 5% des Maximalwertes.

Beispiel 70

Eine polymerisierbare Mischung, welche in 10 ml Dezylmethakrylatlösung 0,160 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 5% des Maximalwertes.

Beispiel 71

Eine polymerisierbare Mischung, welche in 10 ml Zetylmethakrylatlösung 0,160 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Die Lumineszenzintensität bei $\lambda_{max}$=613 nm beträgt 5% des Maximalwertes.

Beispiel 72

Eine polymerisierbare Mischung, welche in 10 ml Allylmethakrylatlösung 0,160 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 8 Stunden auf. Die Lumineszenzintensität bei $\lambda_{max}$= 613 nm beträgt 6% des Maximalwertes.

Beispiel 73

Eine polymerisierbare Mischung, welche in 10 ml Styrollösung 0,080 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks tritt innerhalb von 8 Stunden auf. Die Lumineszenzintensität bei $\lambda_{max}$= 613 nm beträgt 3% des Maximalwertes.

Beispiel 74

Eine polymerisierbare Mischung, welche in 10 ml Methylmethakrylat-Styrol-Lösung (1:1 Masseverhältnis) 0,160 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 8 Stunden auf. Die Lumineszenzintensität bei $\lambda_{max}$= 613 nm beträgt 8% des Maximalwertes.

Beispiel 75

Eine polymerisierbare Mischung, welche in 10 ml Methylmethakrylat der Zetylmethakrylsäure (1:1 Masseverhältnis) 0,320 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$= 613 nm beträgt 10% des Maximalwertes.

Beispiel 76

Eine polymerisierbare Mischung, welche in 10 ml Methylmethakrylat der Allylmethakrylsäure (1:1 Masseverhältnis) 0,320 g Europiumtrifluorazetat ($Eu(CF_3COO)_3$)

und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$=613 nm beträgt 10% des Maximalwertes.

Beispiel 77

Eine polymerisierbare Mischung, welche in 10 ml Styrol-Methakrylat-Lösung (1:1 Masseverhältnis) 0,160 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$=613 nm beträgt 7% des Maximalwertes.

Beispiel 78

Eine polymerisierbare Mischung, welche in 10 ml Methylmethakrylatlösung 0,650 g Europiumtrifluorazetat ($Eu(CF_3COO)_3$), 0,060 g Terbiumtrifluorazetat ($Tb(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte des polymeren Blocks tritt nach der Bestrahlung des polymeren Blocks innerhalb von 10 Stunden auf. Die Lumineszenzintensität bei $\lambda_{max}$= 613 nm beträgt 22% des Maximalwertes.

Beispiel 79

Eine polymerisierbare Mischung, weldhe in 10 ml Methylmethakrylatlösung 0,00025 g Europiumtrifluorazetat ($Eu(CF_3COO)_3$), 0,027 g Orthophenanthrolin ($C_{12}H_8N_2$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt , wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$=613 nm beträgt 0,1% des Maximalwertes.

Beispiel 80

Eine polymerisierbare Mischung, welche in 10 ml Methylmethakrylatlösung 0,128 g Europiumtrifluorazetat ($Eu(CF_3COO)_3$), 330 g N,N-Dimethylformamid ($C_3H_7ON$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%. Der zweifache Abfall der Leuchtdichte tritt nach der Bestrahlung des polymeren Blocks innerhalb von 6 Stunden auf. Die Lumineszenzintensität bei $\lambda_{max}$=613 nm beträgt 8% des Maximalwertes.

Beispiel 81

Eine polymerisierbare Mischung, welche in 10 ml Methylmethakrylat-8-D-Lösung 1,960 g Europiumtrifluorazetat ($Eu(CF_3COO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$=613 nm beträgt 50% des Maximalwertes.

Beispiel 82

Eine polymerisierbare Mischung, welche in 10 ml Methylmethakrylatlösung 1,760 g Europiumdifluor-1D--azetat ($Eu(CF_2DCOO)_3$) und 0,05 g Benzoylperoxid enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%, die Änderung der Lumineszenzeigenschaften innerhalb von 2 Stunden ist nicht nachgewiesen. Der zweifache Abfall der Leuchtdichte tritt nach der Bestrahlung des polymeren Blocks innerhalb von 10 Stunden auf. Die Lumineszenzintensität bei $\lambda_{max}$=613 nm beträgt 50% des Maximalwertes.

Beispiel 83

Eine polymerisierbare Mischung, welche in 10 ml Methylmethakrylatlösung 0,128 g Europiumtrifluorazetat ($Eu(CF_3COO)_3$), 1,450 g N,N-Dimethylformamid-7D und 0,05 g Benzoylperoxid enthält, wird unter Bedingungen hergestellt und polymerisiert, die den in Beispiel 1 angegebenen ähneln.

Die Prüfung den hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 92%. Der zweifache Abfall der Leuchtdichte tirtt nach der Bestrahlung des polymeren Blocks innerhalb von 6 Stunden auf. Die Lumineszenzintensität bei $\lambda_{max}$= 613 nm beträgt 10% des Maximalwertes.

Beispiel 84

Eine polymerisierbare Mischung, welche in 10 ml Methylmethakrylatlösung 0,049 g Europiumtrifluorazetat ($Eu(CF_3COO)_3$) und 0,05 g Azodiisobuttersäuredinitril enthält, wird unter Bedingungen hergestellt und polymerisiert, die den in Beispiel 1 angegebenen ähneln.

Die Prüfung des hergestellten transparenten polymeren Blocks, dessen Dicke 2 mm beträgt, wird nach den Methodiken durchgeführt, die den in Beispiel 1 angegebenen ähneln. Die Lichtdurchlässigkeit des Blocks beträgt dabei 88%. Der zweifache Abfall der Leuchtdichte tritt nach der Bestrahlung des polymeren Blocks innerhalb von 6 Stunden auf. Die Lumineszenzintensität bei $\lambda_{max}$= 613 nm beträgt 8% des Maximalwertes.

## Industrielle Anwendbarkeit

Die vorliegende Erfindung wird in der Opto- und Mikroelektronik bei der Herstellung von Elementen, welche die Strahlung sichtbar machen oder die kohärente Strahlung verstärken, Verwendung finden. Die Erfindung lässt sich auch in der Heliotechnik bei der Herstellung von Fokussierelementen, in der Haushaltradioelektronik zur Steigerung des Farbkontrastes von Fernsehschirmen, in der Landwirtschaft und Biotechnologie zur Fertigung von Überzügen, welche die Ultraviolettkomponente des Sonnenlichtes in die Strahlung im Rotbereich transformieren, verwenden.

PATENTANSPRÜCHE :

1. Polymerisierbare Mischung zur Herstellung von Lumineszenz- und eine Strahlung selektiv absorbierenden Stoffen auf der Basis von flüssigem Monomer, welche ein Seltenerdsalz einer Karbonsäure enthält, dadurch g e k e n n z e i c h n e t, dass sie als Seltenerdsalz der Karbonsäure wenigstens 1 Seltenerdsalz einer halogenierten niederen aliphatischen Karbonsäure in einer Menge enthält, die seine $5x10^{-5}$ bis 1 Mol/Liter betragende Konzentration im Monomer bewirkt.

2. Polymerisierbare Mischung nach Anspruuch 1, dadurch g e k e n n z e i c h n e t, dass sie als Seltenerdsalze von halogensubstituierten niederen aliphatischen Karbonsäuren Yttrium- und/oder Lanthan- und/oder Lanthanoidensalze der fluor- und/oder chlor- und/oder brom- und/oder jodsubstituierten aliphatischen Karbonsäuren enthält.

3. Polymerisierbare Mischung nach Anspruch 1, dadurch g e k e n n z e i c h n e t, dass sie als halogensubstituierte niedere aliphatische Karbonsäure eine Säure enthält, die wenigstens 1 Deuteriumatom hat, das das Wasserstoffatom ersetzt.

4. Polymerisierbare Mischung nach Anspruch 1, dadurch g e k e n n z e i c h n e t, dass sie als Seltenerdsalze einer halogensubstituierten niederen aliphatischen Karbonsäure Seltenerdhalogenazetate enthält.

5. Polymerisierbare Mischung nach Anspruch 1, dadurch g e k e n n z e i c h n e t, dass sie fotoaktive Zusätze und zwar organische Verbindungen mit Sauerstoff- und Stickstoffheteroatomen zusätzlich enthält.

6. Polymerisierbare Mischung nach Anspruch 5, dadurch g e k e n n z e i c h n e t, dass sie als fotoaktive Zusätze heterozyklische Verbindungen und/oder >O- oder = O -gruppenhaltige Verbindungen enthält.

7. Polymerisierbare Mischung nach Anspruch 6, dadurch g e k e n n z e i c h n e t, dass sie als fotoaktive Zusätze organische Verbindungen mit wenigstens 1 Deuteriumatom enthält, das das Wasserstoffatom substituiert.

8. Polymerisierbare Mischung nach Anspruch 1, dadurch g e k e n n z e i c h n e t, dass sie fotoaktive Zusätze in einer Menge enthält, die ihre Konzentration im Monomer bewirkt, die $5x10^{-5}$ bis 2 Mol/Liter beträgt.

9. Polymerisierbare Mischung nach Anspruch 1 oder 5, dadurch g e k e n n z e i c h n e t, dass sie einen Radikalpolymerisationsanreger zusätzlich enthält.

10. Polymerisierbare Mischung nach Anspruch 9, dadurch g e k e n n z e i c h n e t, dass sie als Radikalpolymerisationsanreger Peroxyanreger enthält.

11. Polymerisierbare Mischung nach Anspruch 9, dadurch g e k e n n z e i c h n e t, dass sie den Polymerisationsanreger in einer Menge von höchstens 0,5%, bezogen auf die Masse der Mischung gemäss Anspruch 1 bis 8, enthält.

12. Polymerisierbare Mischung nach Anspruch 1 oder 5 oder 9, dadurch g e k e n n z e i c h n e t, dass sie als Monomer Alkylmethakrylat und/oder Allylmethakrylat und/oder Styrol und/oder deuterierte Derivate derselben enthält.

13. Polymerisierbare Mischung nach Anspruch 12, dadurch g e k e n n z e i c h n e t, dass sie Alkylmethakrylate mit 1 bis 16 Kohlenstoffatomen im Alkylrest enthält.

# INTERNATIONAL SEARCH REPORT

International Application No PCT/SU 88/00276

**I. CLASSIFICATION OF SUBJECT MATTER** (if several classification symbols apply, indicate all) [6]

According to International Patent Classification (IPC) or to both National Classification and IPC

Int.Cl.4 C 08 L 33/10, C 09 K 11/06, C 08 F 2/44, 120/14

**II. FIELDS SEARCHED**

Minimum Documentation Searched [7]

| Classification System | Classification Symbols |
|---|---|
| Int.Cl.4 | C 08 F 2/44, 120/14, C 08 L 33/10, C 09 K 11/00, 11/06,11/08 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | EP,BI, 0100519 (KYOWA GAS CHEMICAL INDUSTRY CO.LTD) 7 January 1988 see page 7-14 (cited in the description) & JP,A, 59-217705 , 7 December 1984 US,A; 4504616 , 12 March 1985 --- | 1 |
| A | US,A, 4629582(TOKYO SHIBAURA DENKI KABUSHIKI KAISHA) 16 December 1986 & GB,BI, 2112800, 27 March 1985 DE,C2, 3248809 , 22 May 1986 JP,A , 57-207676 , 20 December 1982 WO,AI, 82/04438, 23 December 1982 --- | 1,2 |
| A | US,A, 4689277 (MITSUBISHI CHEMICAL INDUSTRIES LTD et al) 25 August 1987 see pages 9-14 & EP,Al, 184201, 11 June 1986 JP,A, 62-63900, 20 March 1987 --- | 1,2 |
| A | US,A, 4024069(RCA CORPORATION) 17 May 1977 see page 4 --- | 1,2 |

.../...

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 23 May 1989 (23.05.89) | 12 June 1989 (12.06.89) |
| **International Searching Authority** | **Signature of Authorized Officer** |
| ~~European Patent Office~~ SU | |